# EUROPEAN PATENT APPLICATION

(11) **EP 1 363 156 A2**
(43) Date of publication of application: **19.11.2003**
(21) Application number: 03010788.2
(22) Date of filing: 14.05.2003
(51) Int. Cl.: G02F 1/13363

(54) **Optical compensator for a liquid crystal display employing a positive and a negative birefringent retardation film**

(30) Priority: 17.05.2002 EP 02010984
(71) Applicant: MERCK PATENT GmbH, 64293 Darmstadt (DE); LG Chemical Co. Ltd, Seoul 150-721 (KR)
(72) Inventor: Skjonnemand, Karl, Dr., Holburn Southampton SO45 2PD (GB); Perrett, Tara, Bournemouth, BH6 3HH (GB); Parri, Owain Llyr, Dr., Poole, Dorset BH15 2LN (GB); Su Yu, Jeong, Yusung-gu, 305-707 Daejon (KR); Belyaev, Sergey Vasilyevich, 141702 Dolgoprudniy (RU); Jeon, Byoung Kun, 312-912 Chungcheonganam-do (KR)

(57) **Abstract**

The invention relates to an optical compensator comprising a positive and a negative birefringent retardation film, its use in displays, particularly in liquid crystal displays, and optical elements, and to displays comprising such a compensator.
The invention further relates to LCDs having a liquid crystal medium which is switchable between two or more different states by application of an electric field.
The positive and negative birefringent films are located on different sides of the switchable liquid crystal medium.

## Description

### Field of the Invention

The invention relates to a compensator comprising a positive and a negative birefringent retardation film, its use in displays and optical elements, and to displays comprising such a compensator.

### Brief Description of the Drawings

Figure 1A schematically depicts an uncompensated MVA-LC display of prior art.
Figure 1 B shows the retardation profile of the LC material in the display of Figure 1A.
Figure 2 shows the relative orientations of polariser transmission axes in the display of Figure 1A when viewed on-axis (2A) and in 45° directions (2B).
Figure 3 shows a typical iso-luminance plot (3A, luminance versus viewing angle) and iso-contrast plot (3B, contrast versus viewing angle) of a display as depicted in Figure 1A.
Figure 4A and Figure 4B schematically depict a compensated MVA-LC display according to the present invention.
Figure 5 shows the iso-luminance plot of a compensated display according to example 3 of the present invention.

### Background and Prior Art

Compensators comprising retardation films with positive and negative birefringence for use in liquid crystal displays (LCD) are known in prior art.

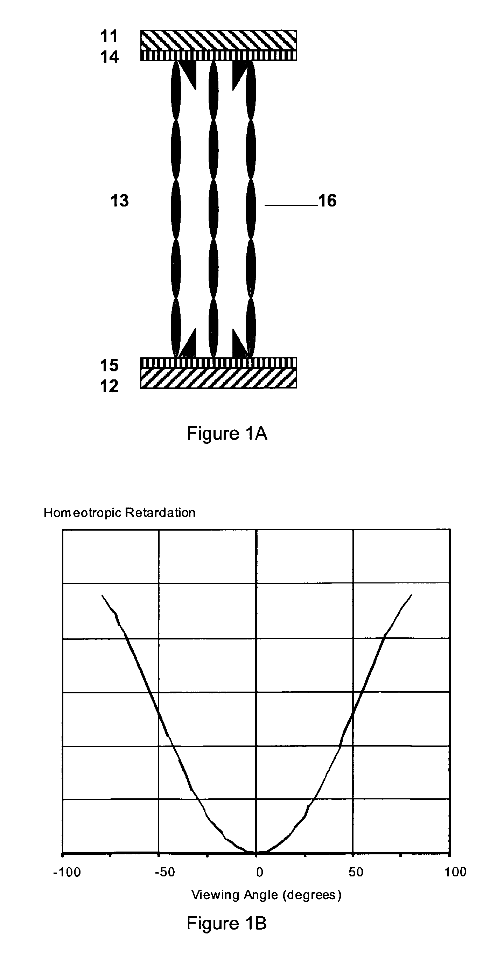

For example, in LCDs of the vertically aligned (VA) mode it is necessary to compensate the undriven homoeotropic state. Transmission type, VA-mode LCD's can be considerd as controllable retardation layers sandwiched between crossed polarisers. **Fig. 1A** depicts a typical VA-LCD comprising two polarisers **11** and **12** with crossed optical axes sandwiching a liquid crystal (LC) cell **13** with an LC medium between two substrates **14** and **15** that are covered by transparent electrode layers. The LC medium has a negative dielectric anisotropy Δε and exhibits homeotropic orientation in the undriven state, i.e. the LC molecules **16** are oriented substantially perpendicular to the substrates, which is usually achieved by alignment layers provided on the surfaces of the substrates **14** and **15** that are in contact wth the LC medium. In multidomain (MVA) LCDs the LC cell is additionally divided into multilple, typically four, perpendicular domains. When applying a voltage to the electrodes the LC molecules in the LC medium will orient sustantially parallel to the substrates due to the negative Δε. In case of MVA displays the director, i.e. the preferred direction of the long molecular axes of the LC molecules, will additionally be oriented into different directions in the domains, which provides symmetrical viewing angle characteristics and good colour performance. The formation of multiple domains in MVA-LCDs can be achieved by various methods that are known in the art, like for example special surface treatment of the alignment layers, applying slots into the electrodes, or adding polymeric material into the LC cell.

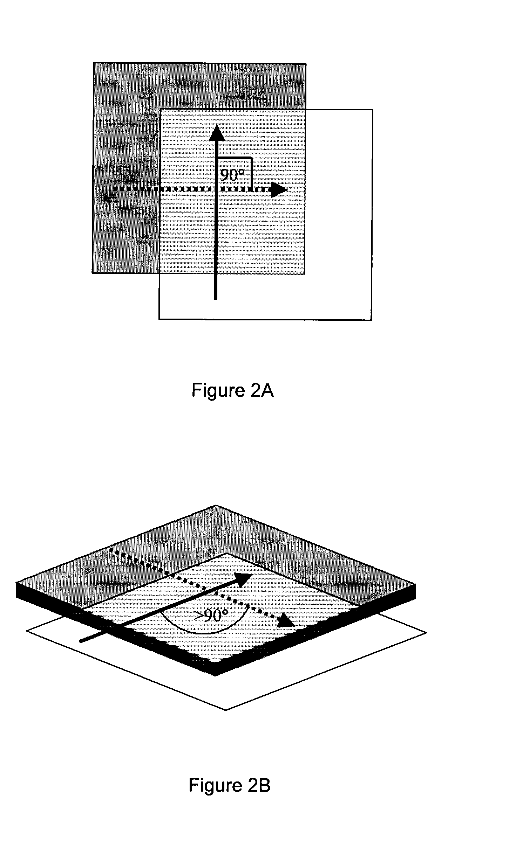

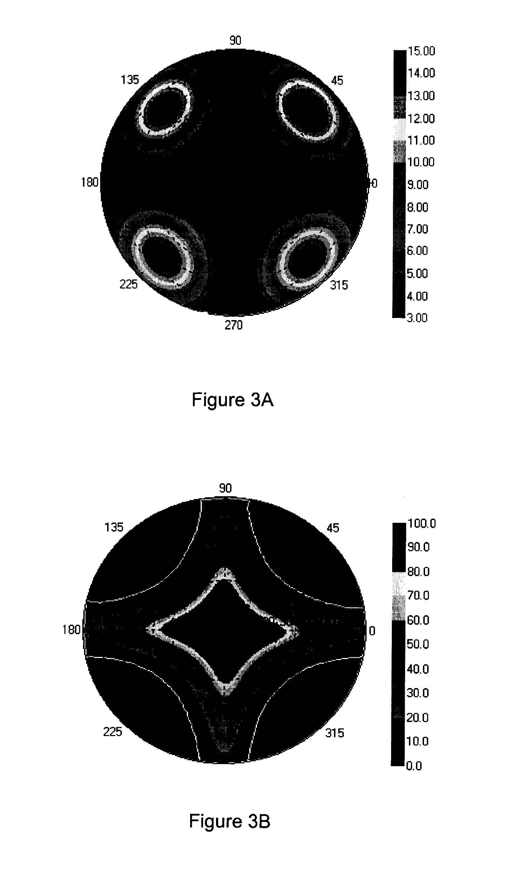

On axis, the crossed polarisers **11, 12** provide a dark state when the cell is un-driven in the vertically aligned, homeotropic state as shown in **Fig. 1A.** Off axis, two effects result in light leakage causing reduced contrast ratio and colour washout. Firstly, the homeotropically oriented LC retards the polarised light off axis as shown in **Fig. 1B,** resulting in a non-linear polarisation state. Secondly, the transmission axes of the polarisers, which are orthgonal when viewed on-axis as shown in **Fig. 2A**, are no longer orthogonal when viewed away from either of the transmission directions as shown in **Fig. 2B.** The dark state light leakage, as shown in the iso-luminance plot of the display depicted in **Fig. 3A,** leads to reduced contrast in the 45° directions, as shown in the isocontrast plot of the display depicted in **Fig. 3B**.

Compensated VA-LCDs have been reported in prior art. Thus, reduction of light leakage through crossed polarisers is well documented and can be achieved using either biaxial or uniaxial films, as reported in Ishinabe, T. Miyashita, T. Uchida and T. Fujimura, Y, "A wide viewing angle polariser and a quarter wave plate with a wide wavelength range for extremely high quality LCDs". Proceedings of the AD/IDW 2001, p485.

Retardation films with positive or negative birefringence are hereinafter shortly referred to as 'positive' or 'negative' retardation films, respectively.

A combination of two uniaxial films, a positive A-plate aligned with the adjacent polariser and a positive C-plate will achieve an acceptable dark state for all viewing angles (the terms "A-plate" and "C-plate" are defined below). The homeotropic LC in the undriven state of the VA cell acts as a positive C retardation plate and thus contributes to this compensation effect. However, in a typical VA cell with e.g. 4 µm thickness there is excessive retardation resulting in overcompensation. This can be cancelled by the addition of a negative C plate to achieve the optimum dark-state.

US 6,281,956 and US 6,141,075 disclose a VA-LCD comprising a switchable LC layer sandwiched by a first and a second polariser, and further comprising a positive and a negative retarder. Both the positive and the negative retarder are situated between the display cell and the first polariser or between the display cell and the second polariser in order to improve viewing angle and contrast of the display. Further disclosed is a display where the pair of positive and negative retarder is replaced by a biaxial retardation film. For the retardation film it is suggested to use a uniaxially or biaxially stretched plastic film like for example a conventional triacetat cellulose (TAC) film, which is typically used in standard displays as protective film covering the polarisers.

However, stretched plastic films like TAC only have very small bireferingence. As the optical retardation is given by the product of the birefringence Δn and the film thickness d, a high film thickness of typically several tens or hundreds of microns is required to provide sufficient retardation values, which is a disadvantage for use in flat panel displays. Furthermore, biaxial films are typically manufactured by a process of side-stretching extruded or cast plastics which is difficult to control.

It was also suggested in prior art to use positive and negative retarders comprising layers of polymerised LC material. Thus, it was shown that a layer of cholesteric LC (CLC) material with a short helical pitch and reflection wavelength peak in the UV range of light (UVCLC) retards visible light with negative C symmetry and can be used as a negative C plate retarder. For example, WO 01/20393 discloses a viewing angle compensator comprising a positive A-plate, a negative C-plate and a positive O-plate retarder. The positive A-plate retarder is for example made of polymerised LC material with planar structure. The negative C-plate retarder is for example made of polymerised UVCLC material. The positive O-plate retarder is for example made of polymerised LC material with tilted or splayed structure. WO 01/20393 further discloses that the compensator can be used in LCDs of the TN or VA mode to improve viewing angle and contrast. As the retardation films comprise LC material having high birefringence, the film thickness can be reduced compared to e.g. stretched plastic films.

However, the use of a stack of three laminated retarders on each side of the display cell increases the total display thickness and the material, and increases manufacturing costs as the LC film retarders are usually manufactured using two piece-to-piece lamination steps. The A-plate must be aligned perpendicular to the polariser stretch direction so cannot be roll-to-roll laminated. The subsequent UVCLC film, which has no preferred alignment direction, is then laminated onto the A-plate also on a piece-to-piece basis. This increases the number of process steps and the material loss when cutting the LC films to pieces.

The aim of the present invention is to provide a compensator for LC displays, in particular for displays of the VA mode, that does not have the drawbacks of compensators, is easy to manufacture and allows economic fabrication even at large scales. Another aim is to provide a compensator which shows good optical performance when used in LC displays, in particular improved grey level stability at wide viewing angles.

A further aim of this invention is to provide an advantageous use of the compensator according to this invention.

Further aims of this invention relate to liquid crystal displays, in particular to VA mode LCDs comprisng an inventive compensator which show advantageous properties such as good contrast, reduced colour shift and wide viewing angles.

Other aims of the present invention are immediately evident to the person skilled in the art from the following detailed description.

The above aims can be achieved by providing compensators and liquid crystal displays according to the present invention.

### Summary of the Invention

The present invention relates to a compensator comprising at least one positive birefringent retardation film and at least one negative birefringent retardation film.

The invention further relates to the use of a compensator according to the invention in electrooptical displays such as liquid crystal displays.

The invention further relates to a liquid crystal display comprising a compensator according to the invention.

The invention further relates to a liquid crystal display comprising a liquid crystal medium that is switchable between at least two different states by application of an electric field and comprising a compensator according to the invention, wherein the positive birefringent retardation film and the negative birefringent retardation film are located on different sides of the switchable liquid crystal medium.

### Definition of Terms

In connection with polarisation, compensation and retardation layers, films or plates as described in the present application, the following definitions of terms as used throughout this application are given.

The term 'film' as used in this application includes self-supporting, i.e. free-standing, films that show more or less pronounced mechanical stability and flexibility, as well as coatings or layers on a supporting substrate or between two substrates.

The term 'liquid crystal or mesogenic material' or 'liquid crystal or mesogenic compound' should denote materials or compounds comprising one or more rod-shaped, board-shaped or disk-shaped mesogenic groups, i.e. groups with the ability to induce liquid crystal phase behaviour. Liquid crystal compounds with rod-shaped or board-shaped groups are also known in the art as 'calamitic' liquid crystals. Liquid crystal compounds with a disk-shaped group are also known in the art as 'discotic' liquid crystals. The compounds or materials comprising mesogenic groups do not necessarily have to exhibit a liquid crystal phase themselves. It is also possible that they show liquid crystal phase behaviour only in mixtures with other compounds, or when the mesogenic compounds or materials, or the mixtures thereof, are polymerised.

For the sake of simplicity, the term 'liquid crystal material' is used hereinafter for both liquid crystal materials and mesogenic materials, and the term 'mesogen' is used for the mesogenic groups of the material.

The term 'director' is known in prior art and means the preferred orientation direction of the long molecular axes (in case of calamitic compounds) or short molecular axis (in case of discotic compounds) of the mesogens in a liquid crystal material.

The term 'planar structure' or 'planar orientation' refers to a film wherein the optical axis is substantially parallel to the film plane.

The term 'homeotropic structure' or 'homeotropic orientation' refers to a film wherein the optical axis is substantially perpendicular to the film plane, i.e. substantially parallel to the film normal.

The terms 'tilted structure' or 'tilted orientation' refers to a film wherein the optical axis is tilted at an angle θ between 0 and 90 degrees relative to the film plane.

The term 'splayed structure' or 'splayed orientation' means a tilted orientation as defined above, wherein the tilt angle additionally varies monotonuously in the range from 0 to 90 °, preferably from a minimum to a maximum value, in a direction perpendicular to the film plane.

In planar, homeotropic and tilted optical films comprising uniaxially positive birefringent liquid crystal material with uniform orientation, the optical axis of the film is given by the director of the liquid crystal material.

The term 'helically twisted structure' relates to a film comprising one or more layers of liquid crystal material wherein the mesogens are oriented with their main molecular axis in a preferred direction within molecular sublayers, said preferred orientation direction in different sublayers being twisted at an angle φ around a helix axis. The term 'helically twisted structure with planar orientation' means a film with helically twisted structure as described above, wherein the helix axis is substantially perpendicular to the film plane, i.e. substantially parallel to the film normal.

The term 'A plate' refers to an optical retarder utilizing a layer of uniaxially birefringent material with its extraordinary axis oriented parallel to the plane of the layer, and its ordinary axis (also called 'a-axis') oriented perpendicular to the plane of the layer, i.e. parallel to the direction of normally incident light.

The term 'C plate' refers to an optical retarder utilizing a layer of a uniaxially birefringent material with its extraordinary axis (also called 'c-axis') perpendicular to the plane of the layer, i.e. parallel to the direction of normally incident light.

The term 'O plate' refers to an optical retarder utilizing a layer of a uniaxially birefringent material with its extraordinary axis oriented at an oblique angle with respect to the plane of the layer.

A retardation film with positive or negative birefringence is also shortly referred to as 'positive' or 'negative' retardation film, respectively.

An A plate or C plate comprising optically uniaxial birefringent material with positive birefringence is also referred to as '+ A/C plate' or 'positive A/C plate'. An A plate or C plate comprising a film of optically uniaxial birefringent material with negative birefringence is also referred to as '- A/C plate' or 'negative A/C plate'.

### Detailed Description of the Invention

The compensator according to the present invention can be used for compensation of conventional LCDs, in particular those of the DAP (deformation of aligned phases) or VA (vertically aligned) mode, like e.g. ECB (electrically controlled birefringence), CSH (colour super homeotropic), VAN or VAC (vertically aligned nematic or cholesteric) displays, MVA (multi-domain vertically aligned) or PVA (patterned vertically aligned) displays, in displays of the bend mode or hybrid type displays, like e.g. OCB (optically compensated bend cell or optically compensated birefringence), R-OCB (reflective OCB), HAN (hybrid aligned nematic) or pi-cell (π-cell) displays, furthermore in displays of the TN (twisted nematic), HTN (highly twisted nematic) or STN (super twisted nematic) mode, in AMD-TN (active matrix driven TN) displays, in displays of the IPS (in plane switching) mode which are also known as 'super TFT' displays, or in displays using liquid crystals in the isotropic state as described for example in DE 102 172 73 or WO 02/93244 A1.

Especially preferred are VA, MVA, PVA, OCB and pi-cell displays.

The compensator according to the present invention preferably comprises a positive A plate retardation film and a negative C plate retardation film.

Suitable optical films for use as positive A plate retarders are known in prior art, like for example uniaxially stretched polymer films such as polyethyleneterephthalate (PET), polyethylenenaphthalate (PEN), polyvinylalcohol (PVA) or polycarbonate (PC) films.

Suitable optical films for use as negative C plate retarders are known in prior art, like for example stretched or uniaxially compressed plastic films like DAC or TAC as described e.g. in US 4,701,028, inorganic thin films obtained by physical vapor deposition as described e.g. in US 5,196,953, or negatively birefringent polyimide films as described e.g. in US 5,480,964 or US 5,395,918.

Especially preferred are the following embodiments
- the compensator comprises one positive A plate retardation film and one negative C plate retardation film,
- the positive and the negative retardation film comprise a polymerised or crosslinked LC material,
- the positive and the negative retardation film are situated in an LCD on different sides of the switchable LC medium,
- the positive retardation film comprises a polymerised or crosslinked achiral LC material with planar orientation,
- the negative retardation film comprises a polymerised or crosslinked cholesteric LC (CLC) material with helically twisted structure and planar orientation,
- the helical pitch of the CLC material in the negative retardation film is smaller than 250 nm,
- the thickness of the positive retardation film is from 0.1 to 3 µm, preferably from 0.5 to 1.5 µm,
- the thickness of the negative retardation film is from 1 to 4 µm, preferably from 2 to 3 µm,
- the optical retardation of the positive retardation film is from 30 to 200 nm, preferably from 50 to 150 nm,
- the optical retardation of the negative retardation film is from 50 to 400 nm, preferably from 100 to 250 nm,

In a first preferred embodiment of the present invention the positive and negative retardation films comprise polymerised or crosslinked LC material. The positive retarder is preferably a positive A plate retardation film comprising polymerised LC material with planar structure as described for example in WO 98/04651. The negative retarder is preferably a negative C plate retardation film comprising polymerised chiral LC, in particular cholesteric LC (CLC) material with a short pitch and a reflection in the UV range, such as a UVCLC film or highly twisted A plate as described for example in GB 2,315,072, WO 01/20393 and WO 01/20394.

As described above a negative UVCLC film has the manufacturing advantage, compared to conventional stretched plastic retarders. that the direction of alignment can be set at any angle and the retardation determined by the twist and the thickness of the film. This will allow roll-to-toll coating rather than piece-to-piece lamination with other optical films, like the polarisers, where non-parallel alignment of the optical axes is required. Furthermore, by using LC material the thickness of the films can be reduced and the birefringence can easily be controlled by appropriate choice of the LC material, thus the desired retardation can be provided in a simple and easily controllable way.

In a second preferred embodiment of the present invention the positive and the negative retardation film are situated in an LCD on different sides of the switchable liquid crystal medium. Preferably each of the positive and negative retardation film are adjacent to a polariser.

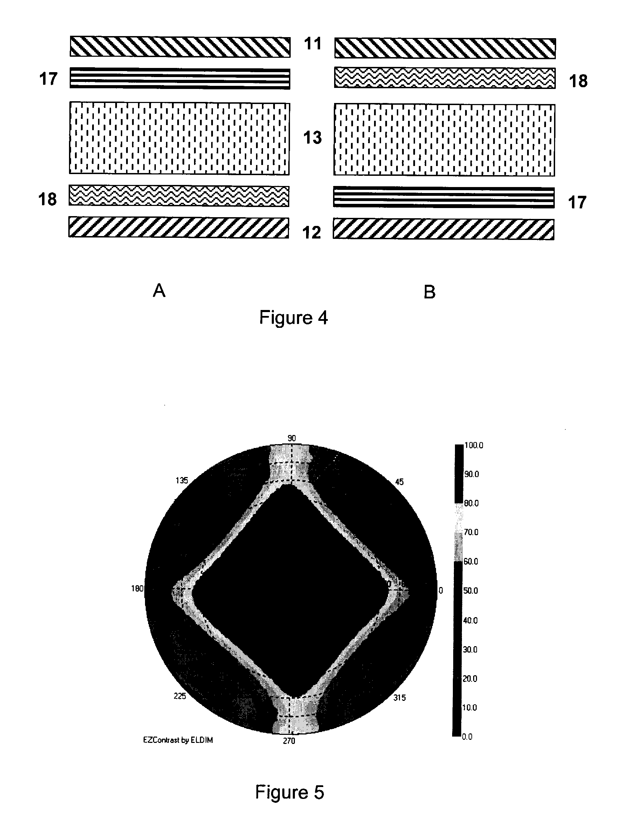

This is schematically depicted in **Fig. 4**, showing a display according to the second preferred embodiment comprising an LC cell **13** with a switchable LC medium between two substrates that is sandwiched by a first polariser **11** and a second polariser **12**, and further comprising a positive retardation film **17** and a negative retardation film **18**. The positive retardation film **17** is preferably a positive A plate retardation film comprising polymerised LC material with planar structure. The negatuve retardation film **18** is preferably a negative C plate retardation film comprising polymerised chiral LC, in particular cholesteric LC (CLC) material with helically twisted structure and planar orientation having a short pitch and a reflection in the UV range, such as a UVCLC film.The positive and negative retardation film **17, 18** can be placed on either side of the LC cell **13** as shown in **Fig. 4A** and **4B,** without a significant effect on the optical performance.

If retardation films made of LC material as mentioned above are used, separation of the two retarders and placing them on the polarisers on opposite sides of the cell allows ease of manufacturing without a reduction, or even with an improvement, of the optical performance. As described above, the negative C plate UVCLC film is roll-to-roll laminated onto the polariser, providing a cheap continuous process. The positive A plate LC film is cut and piece-to-piece laminated to the polariser such that the optical axis of the A plate and the polarisation absorption axis of the polariser are oriented at 90° to each other. LC film pieces that have defects due to manufacture can be discarded prior to lamination to the expensive polariser. This improves the total yield regarding the consumed amount of optical films, as only one type of cheap LC film has eventually to be discarded. This is an advantage compared to compensators of prior art like e.g. those described in WO 01/20393, comprising a stack of three different films, one O plate, one A plate and one C plate retarder, which have to be laimanted piece-to-piece onto each other and onto a polariser.

Furthermore, the separation of the positive and negative film leads to an improved optical performance when used in an LC display.

An LCD comprising a positive and negative retardation film as described above an below is another aspect of the invention. Especially preferred is an LCD comprising the following components
- a liquid crystal cell formed by two transparent substrates having surfaces which oppose each other, an electrode layer provided on the inside of at least one of said two transparent substrates and optionally superposed with an alignment layer, and a liquid crystal medium which is present between the two transparent substrates that is switchable between at least two different states by application of an electric field,
- a first linear polariser on one side of the liquid crystal cell,
- a second linear polariser on the side of the liquid crystal cell opposite to that of said first linear polariser,
- at least one positive retardation film and at least one negative retardation film as described above and below, said films being situated on opposite sides of the liquid crystal cell, it being possible for the above components to be separated, stacked, mounted on top of each other, coated on top of each other or connected by means of adhesive layers.

Very preferred is an LCD, wherein the switchable LC medium exhibits a negative dielectric anisotropy and the LC molecules of the switchable liquid crystal medium exhibit a substantially homeotropic orientation when no electric field is applied.

Very preferably the LCD is a display of the vertically aligned (VA), multidomain VA (MVA) or patterned VA (PVA) mode. Displays of these types are generally known in the art.

The individual optical components of the LCD according to the invention, such as the LC cell, the individual retarders and the linear polarisers, can be separated or can be laminated to other components. They can be stacked, mounted on top of each other or be connected e.g. by means of adhesive layers. In case of films comprising polymerised LC material, it is also possible that stacks of two or more films are prepared by coating the LC material of one film directly onto another film, the latter serving as substrate.

The LCDs according to the present invention may further comprise one or more further optical components such as polarisers or compensation or retardation films, like for example A, O or C plates or retardation films with twisted, homeotropic, planar, tilted or splayed structure. Particularly preferred are optical films comprising polymerised or crosslinked LC material. Tilted or splayed LC films are described for example in US 5,619,352, WO 97/44409, WO 97/44702, WO 97/44703 and WO 98/12584. Homeotropic LC films are described for example in WO 98/00475. Planar LC films are described for example in WO 98/04651.

The LCD according to the present invention may be a reflective or transmissive display, and may further comprise a light source, like a conventional backlight, or a reflective layer on the side of the LC cell opposite to that of the first linear polariser. In case of a reflective display with a reflective layer on one side of the LC cell the second linear polariser may be omitted.

The negative and positive retarders of the inventive compensator are preferably prepared from a polymerisable LC material by in-situ polymerisation. In a preferred method of preparation the polymerisable LC material is coated onto a substrate, oriented into the desired orientation and subsequently polymerised for example by exposure to heat or actinic radiation as described for example in WO 01-20394, GB 2,315,072 or WO 98/04651.

Very preferably the liquid crystalline or mesogenic materials, compounds and polymers compounds mentioned above and below are selected from calamitic liquid crystalline or mesogenic materials, which provide good optical performance with improved chromaticity, and, especially in case of monomers, can easily and quickly be aligned into the desired orientation, which is especially important when manufacturing polymer films at large scale.

In case of the UVCLC film the polymerisable LC material preferably comprises one or more achiral polymerisable mesogenic compounds and at least one chiral compound. The chiral compound can be selected from non-polymerisable chiral compounds, like e.g. conventional chiral dopants, polymerisable chiral non-mesogenic or polymerisable chiral mesogenic compounds.

In case of the planar LC film the polymerisable LC material preferably comprises one or more achiral polymerisable mesogenic compounds.

In general, the polymerisable LC material preferably comprises at least one polymerisable mesogen having one polymerisable functional group (monoreactive compound) and at least one polymerisable mesogen having two or more polymerisable functional groups (di- or multireactive compound).

If di- or multireactive compounds are present in the polymerisable material, a three-dimensional polymer network is formed and the orientation of the LC material is permanently fixed. An optical retardation film made of such a network is self-supporting and shows a high mechanical and thermal stability and a low temperature dependence of its physical and optical properties.

By varying the concentration of the di- and multireactive compounds the crosslink density of the polymer film and thereby its physical and chemical properties such as the glass transition temperature, which is also important for the temperature dependence of the optical properties of the optical retardation film, the thermal and mechanical stability or the solvent resistance can be tuned easily.

The polymerisable mesogenic mono-, di- or multireactive compounds used for the instant invention can be prepared by methods which are known per se and which are described, for example, in standard works of organic chemistry such as, for example, Houben-Weyl, Methoden der organischen Chemie, Thieme-Verlag, Stuttgart. Typical examples are described for example in WO 93/22397; EP 0 261 712; DE 19504224; DE 4408171 and DE 4405316. The compounds disclosed in these documents, however, are to be regarded merely as examples that do not limit the scope of this invention.

Examples representing especially useful calamitic mono- and direactive polymerisable mesogenic compounds are shown in the following list of compounds, which should, however, be taken only as illustrative and is in no way intended to restrict, but instead to explain the present invention:

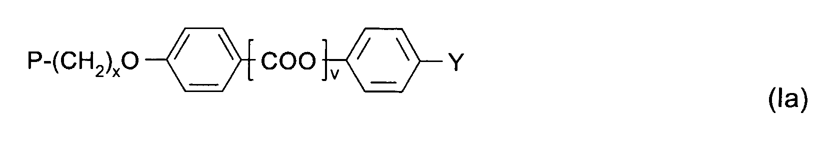

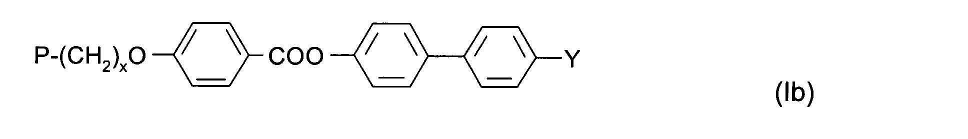

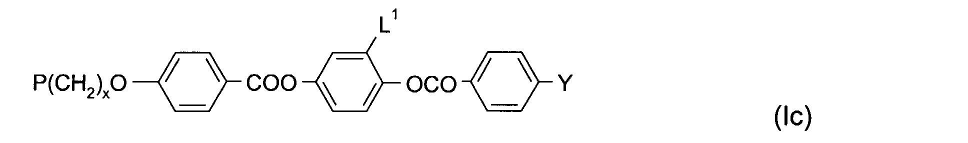

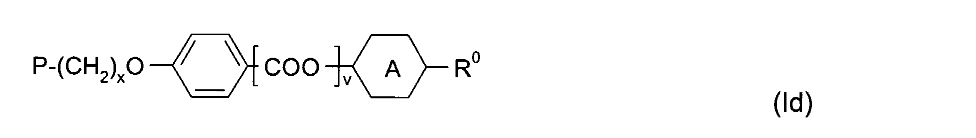

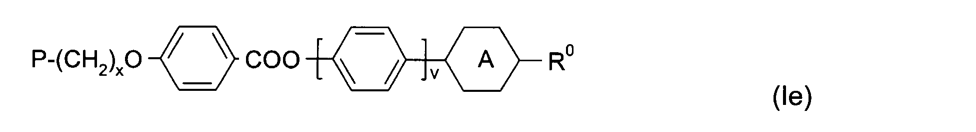

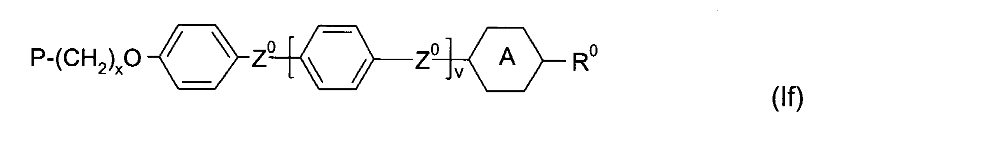

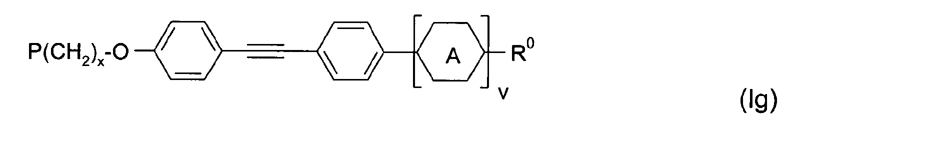

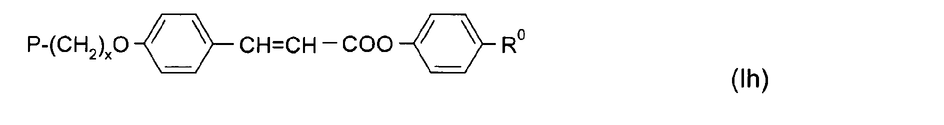

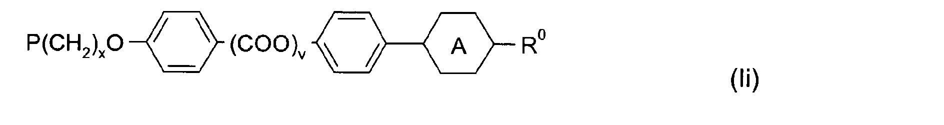

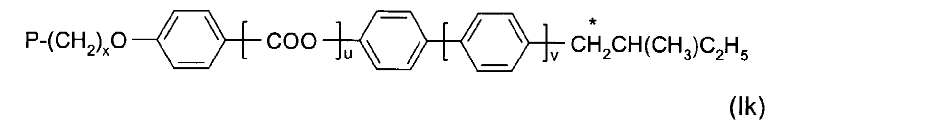

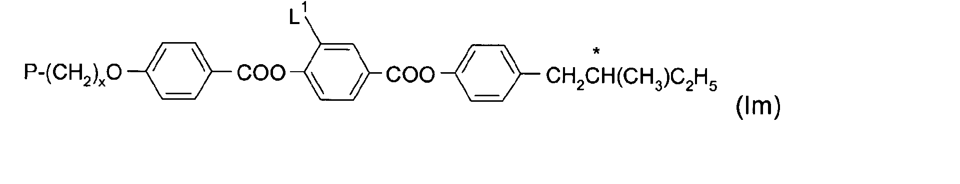

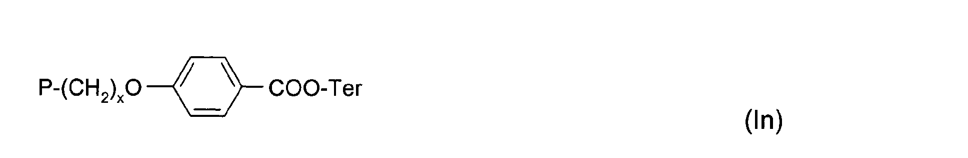

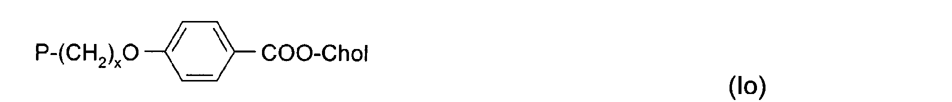

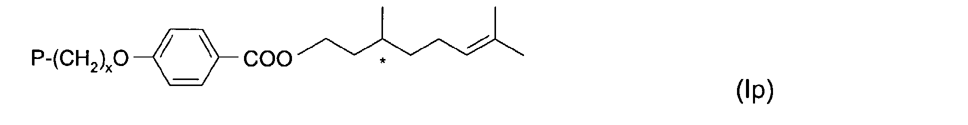

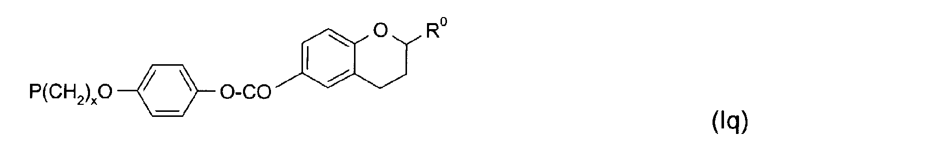

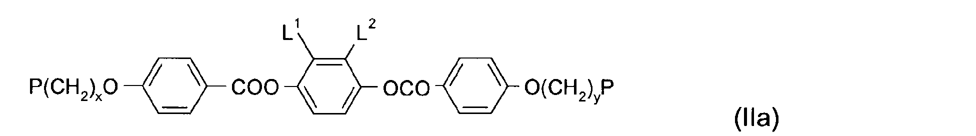

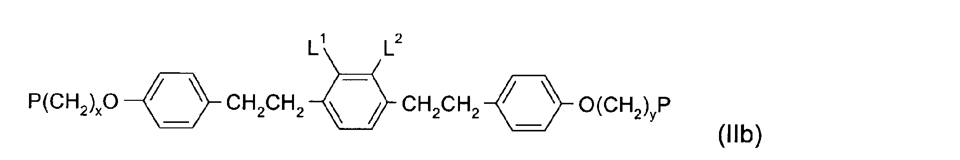

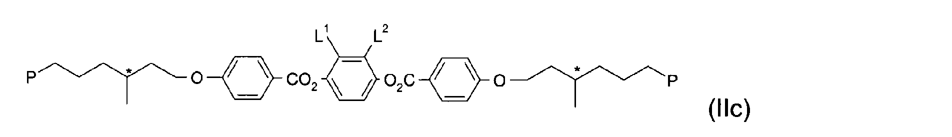

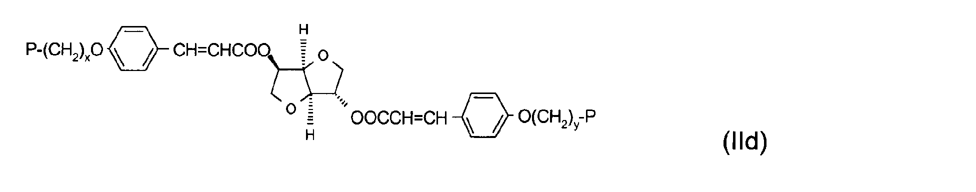

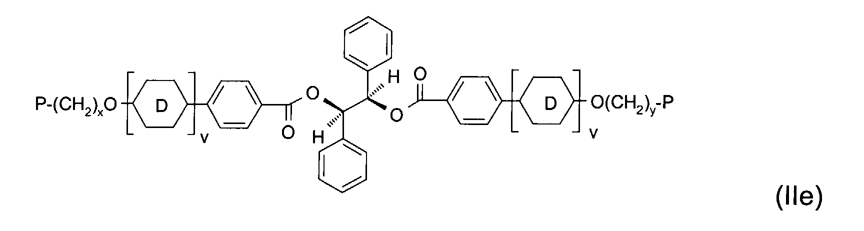

In the above formulae, P is a polymerizable group, preferably an acryl, methacryl, vinyl, vinyloxy, propenyl ether, epoxy or styrene group, x and y are each independently 1 to 12 , A and D are 1,4-phenylene that is optionally mono- di or trisubstituted by L¹ or 1,4-cyclohexylene, v is 0 or 1, Z⁰ is -COO-, -OCO-, -CH₂CH₂- or a single bond, Y is a polar group, R⁰ is an unpolar alkyl or alkoxy group, Ter is a terpenoid radical like e.g. menthyl, Chol is a cholesteryl group, and L¹ and L² are each independently H, F, Cl, CN or an optionally halogenated alkyl, alkoxy, alkylcarbonyl, alkoxycarbonyl or alkoxycarbonyloxy group with 1 to 7 C atoms.

The term 'polar group' in this connection means a group selected from F, Cl, CN, NO₂, OH, OCH₃, OCN, SCN, an optionally fluorinated carbonyl or carboxyl group with up to 4 C atoms or a mono- oligo- or polyfluorinated alkyl or alkoxy group with 1 to 4 C atoms.

The term 'unpolar group' means an alkyl group with 1 or more, preferably 1 to 12 C atoms or an alkoxy group with 2 or more, preferably 2 to 12 C atoms.

In case of polymerisable LC mixtures comprising one or more chiral dopants, the dopants can be selected e.g. from the commercially available R or S 811, R or S 1011, R or S 2011, R or S 3011, R or S 4011 or CB 15 (Merck KGaA, Darmstadt, Germany).

Very preferred are chiral dopants with a high helical twisting power (HTP), in particular dopants comprising a sorbitol group as described in WO 98/00428, dopants comprising a hydrobenzoin group as described in GB 2,328,207, chiral binaphthyl derivatives as described in WO 02/94805, chiral binaphthol acetal derivatives as described in WO 02/34739, chiral TADDOL derivatives as described in WO 02/06265, and chiral compounds having at least one fluorinated linkage group and a terminal or central chiral group as described in WO 02/06196 and WO 02/06195.

As a substrate for the preparation of the polymer films for example a glass or quarz sheet or a plastic film or sheet can be used. It is also possible to put a second substrate on top of the coated mixture prior to and/or during and/or after polymerisation. The substrates can be removed after polymerisation or not. When using two substrates in case of curing by actinic radiation, at least one substrate has to be transmissive for the actinic radiation used for the polymerisation. Isotropic or birefringent substrates can be used. In case the substrate is not removed from the polymerized film after polymerisation, preferably isotropic substrates are used.

Preferably at least one substrate is a plastic substrate such as for example a film of polyester such as polyethyleneterephthalate (PET) or polyethylenenaphthalate (PEN), of polyvinylalcohol (PVA), polycarbonate (PC) or triacetylcellulose (TAC), especially preferably a PET film or a TAC film. As a birefringent substrate for example an uniaxially stretched plastic film can be used. For example PET films are commercially available from DuPont Teijin Films under the trade name Melinex ®.

The polymerisable material can also be dissolved in a solvent, preferably in an organic solvent. The solution is then coated onto the substrate, for example by spin-coating or other known techniques, and the solvent is evaporated off before polymerization. In most cases it is suitable to heat the mixture in order to facilitate the evaporation of the solvent.

Polymerisation of the LC material is preferably achieved by exposing it to actinic radiation. Actinic radiation means irradiation with light, like UV light, IR light or visible light, irradiation with X-rays or gamma rays or irradiation with high energy particles, such as ions or electrons. Preferably polymerisation is carried out by photoirradiation, in particular with UV light, very preferably with linear polarised UV light. As a source for actinic radiation for example a single UV lamp or a set of UV lamps can be used. When using a high lamp power the curing time can be reduced. Another possible source for photoradiation is a laser, like e.g. a UV laser, an IR laser or a visible laser.

Polymerisation is carried out in the presence of an initiator absorbing at the wavelength of the actinic radiation. For example, when polymerising by means of UV light, a photoinitiator can be used that decomposes under UV irradiation to produce free radicals or ions that start the polymerisation reaction. UV photoinitiators are preferred, in particular radicalic UV photoinitiators. As standard photoinitiator for radical polymerisation for example the commercially available Irgacure® 651, Irgacure® 184, Darocure® 1173 or Darocure® 4205 (all from Ciba Geigy AG) can be used, whereas in case of cationic photopolymerisation the commercially available UVI 6974 (Union Carbide) can be used.

The polymerisable LC material can additionally comprise one or more other suitable components such as, for example, catalysts, sensitizers, stabilizers, chain-transfer agents, inhibitors, co-reacting monomers, surface-active compounds, lubricating agents, wetting agents, dispersing agents, hydrophobing agents, adhesive agents, flow improvers, defoaming agents, deaerators, diluents, reactive diluents, auxiliaries, colourants, dyes or pigments.

In another preferred embodiment the mixture of polymerisable material comprises up to 70%, preferably 1 to 50 % of a monoreactive non-mesogenic compound with one polymerisable functional group. Typical examples are alkyl acrylates or alkyl methacrylates with alkyl groups of 1 to 20 C atoms.

It is also possible, in order to increase crosslinking of the polymers, to add up to 20% of a non-mesogenic compound with two or more polymerisable functional groups to the polymerisable LC material alternatively or in addition to the di- or multireactive polymerisable mesogenic compounds to increase crosslinking of the polymer. Typical examples for direactive non-mesogenic monomers are alkyl diacrylates or alkyl dimethacrylates with alkyl groups of 1 to 20 C atoms. Typical examples for multireactive non-mesogenic monomers are trimethylpropane trimethacrylate or pentaerythritol tetraacrylate.

It is also possible to add one or more chain transfer agents to the polymerisable material in order to modify the physical properties of the polymer film. Especially preferred are thiol compounds, such as monofunctional thiol compounds like e.g. dodecane thiol or multifunctional thiol compounds like e.g. trimethylpropane tri(3-mercaptopropionate), very preferably mesogenic or liquid crystalline thiol compounds. When adding a chain transfer agent, the length of the free polymer chains and/or the length of the polymer chains between two crosslinks in the inventive polymer film can be controlled. When the amount of the chain transfer agent is increased, the polymer chain length in the obtained polymer film is decreasing.

Planar alignment can be achieved for example by shearing the material, e.g. by means of a doctor blade. It is also possible to apply an alignment layer, for example a layer of rubbed polyimide or sputtered SiOₓ, on top of at least one of the substrates. Planar alignment can also be achieved by rubbing the substrate without applying an additional alignment layer, e.g. by means of a rubbing cloth or a rubbing roller. If a rubbed substrate is used for the preparation of a retardation film according to the invention, the direction of the optical axis of the film usually corresponds to the rubbing direction of the substrate.

Planar alignment with a low tilt angle can also be achieved or enhanced by adding one or more surfactants to the polymerizable mesogenic material. Suitable surfactants are described for example in J. Cognard, Mol.Cryst.Liq.Cryst. **78**, Supplement 1, 1-77 (1981). Particularly preferred are non-ionic surfactants, e.g. non-ionic fluorocarbon surfactants, like the commercially available Fluorad® (from 3M), or Zonyl FSN ® (from DuPont).

Alternatively to the method described above it is possible to prepare the retardation films from a readily synthesized LC polymer that is applied onto a substrate, for example at a temperature above its glass transition temperature or its melting point, or from solution e.g. in an organic solvent, aligned into the desired orientation, and solidified e.g. by evaporating the solvent or by cooling below the glass temperature or melting point of the LC polymer. If for example a LC polymer with a glass temperature that is higher than ambient temperature is used, evaporation of the solvent or cooling leaves a solid LC polymer film. If for example an LC polymer with a high melting point is used, the LC polymer can be applied as a melt onto the substrate which solidifies upon cooling. LC side chain polymers or LC main chain polymers can be used, preferably LC side chain polymers. The LC polymer should preferably be selected such that its glass transition or melting temperature is significantly higher than the operating tempature of the retarder. For example, LC side chain polymers comprising a polyacrylate, polymethacrylate, polysiloxane, polystyrene or epoxide backbone with laterally attached mesogenic side chains can be used. The LC polymer may also comprise side chains with reactive groups that can be crosslinked after or during evaporation of the solvent to permanently fix the orientation. The LC polymer may also be subjected to mechanical or heat treatment after application to the substrate to improve alignment. The above methods and suitable materials are known to those skilled in the art.

The examples below serve to illustrate the invention without limiting it. In the foregoing and the following, all temperatures are given in degrees Celsius, and all percentages are by weight, unless stated otherwise.

### Example 1 - Preparation of a Negative Retarder

The following polymerisable mixture was formulated

| | |
|---|---|
| Compound (1) | 48.5 % |
| Compound (2) | 7.5 % |
| Compound (3) | 10.5 % |
| Compound (4) | 21.5 % |
| Paliocolor LC756 ® | 7.5 % |
| Irgacure 907 ® | 4.0 % |
| Fluorad FC171 ® | 0.5 % |

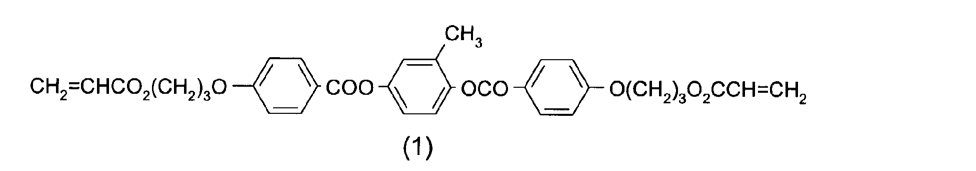

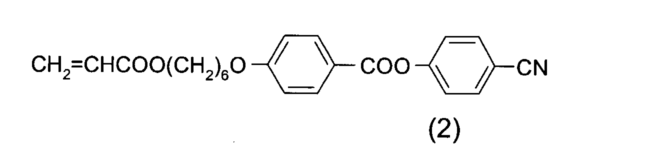

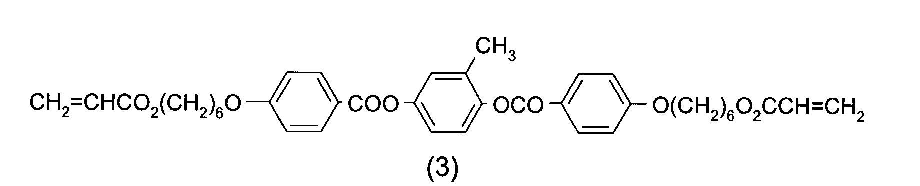

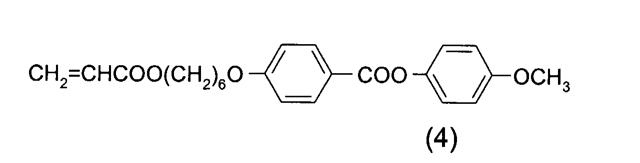

Compounds (2) and (4) can be prepared according to or in analogy to the methods described in D.J.Broer et al., Makromol.Chem. **190,** 3201-3215 (1989). The direactive compounds (1) and (3) can be prepared as described in WO 93/22397. Paliocolour LC756 is a commercially available chiral polymerisable material (from BASF AG, Ludwigshafen, Germany). Irgacure 907 is a commercially available photoinitiator (from Ciba AG, Basel, Switzerland). Fluorad FC 171 is a commercially available non-ionic fluorocarbon surfactant (from 3M).

A polymer film with helically twisted structure and planar alignment was prepared from the above mixture by coating onto a substrate and curing under UV light as described in example 3 of WO 01/20394. The resulting polymer film shows negative C symmetry with a retardation of 140 nm and a thickness of 2.5 µm.

### Example 2 - Preparation of a Positive Retarder

The following polymerisable mixture was formulated

| | |
|---|---|
| Compound (1) | 42.25 % |
| Compound (2) | 32.86 % |
| Compound (5) | 18.78 % |
| Irgacure 907 ® | 5.63 % |
| FC171® | 0.48 % |

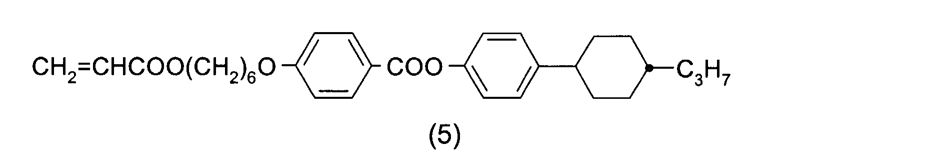

Compound (5) and its preparation are described in GB 2,280,445.

A polymer film with planar structure was prepared from the above mixture by coating onto a rubbed substrate and curing under UV light as described in example 1 of WO 98/04651. The resulting polymer film shows positive A symmetry with a retardation of 90 nm and a thickness of 0.8 µm.

### Example 3

A negative LC polymer retardation film is manufactured as described in example 1 on a roll and roll-to-roll laminated to a linear polariser. As linear polariser a commercially available dichroic polariser is used, comprising a stretched PVA film dyed by either iodine or dichroic dye both surfaces of which are protected by TAC films. The typical optical properties are polarising efficiency of 99.95 % and single transmittance of 43 %. The stretching direction is parallel to the absorption axis of polariser.

A positive LC polymer retardation film is manufactured as described in example 2, cut into pieces and the pieces are piece-to-piece laminated to the polariser such that the optical axis of the positive retarder and the polarisation absorption axis of the polariser are oriented at 90° to each other. LC polymer pieces that have defects due to manufacture can be discarded prior to lamination to the polariser, thus improving the total yield with respect to the amount of the expensive polariser consumed.

The two films are put on different sides of a VA-cell as depicted in **Fig. 4**. The isocontrast plot of the compensated display is shown in **Fig. 5**. The display shows a good contrast and a high colour stability over a wide range of viewing angles.

## Claims

1. Compensator comprising at least one positive birefringent retardation film and at least one negative birefringent retardation film.

2. Compensator according to claim 1 for use in a liquid crystal display comprising a liquid crystal medium that is switchable between at least two different states by application of an electric field, **characterized in that** the positive birefringent retardation film and the negative birefringent retardation film are located on different sides of the switchable liquid crystal medium.

3. Compensator according to claim 1 or 2, **characterized in that** the positive and the negative birefringent retardation film comprise polymerised or crosslinked liquid crystal material.

4. Compensator according to claim 3, **characterized in that** the liquid crystal material comprises calamitic liquid crystal or mesogenic molecules.

5. Compensator according to to at least one of claims 1 to 4, **characterized in that** the positive birefringent retardation film comprises a polymerised or crosslinked achiral liquid crystal material with planar orientation.

6. Compensator according to at least one of claims 1 to 5, **characterized in that** the negative birefringent retardation film comprises a polymerised or crosslinked chiral liquid crystal material with helically twisted structure and planar orientation.

7. Compensator according to claim 6, **characterized in that** the helical pitch of the chiral liquid crystal material in the negative birefringent retardation film is smaller than 250 nm.

8. Compensator according to at least one of claims 1 to 7, **characterized in that** the thickness of the positive retardation film is from 0.5 to 1.5 µm.

9. Compensator according to at least one of claims 1 to 8, **characterized in that** the thickness of the negative retardation film is from 2 to 3 µm.

10. Compensator according to at least one of claims 1 to 9, **characterized in that** the optical retardation of the positive retardation film is from 50 to 150 nm.

11. Compensator according to at least one of claims 1 to 10, **characterized in that** the optical retardation of the negative retardation film is from 100 to 250 nm.

12. Use of a compensator according to at least one of claims 1 to 11 in electrooptical displays or liquid crystal displays.

13. Liquid crystal display comprising a liquid crystal medium that is switchable between at least two different states by application of an electric field, **characterized in that** comprises a compensator according to at least one of claims 1 to 11.

14. Liquid crystal display according to claim 13, comprising the following components
- a liquid crystal cell formed by two transparent substrates having surfaces which oppose each other, an electrode layer provided on the inside of at least one of said two transparent substrates and optionally superposed with an alignment layer, and a liquid crystal medium which is present between the two transparent substrates that is switchable between at least two different states by application of an electric field,
- a first linear polariser on one side of the liquid crystal cell,
- a second linear polariser on the side of the liquid crystal cell opposite to that of said first linear polariser,
- at least one positive birefringent retardation film and at least one negative birefringent retardation film according to at least one of claims 1 to 11, said films being situated on opposite sides of the liquid crystal cell,
it being possible for the above components to be separated, stacked, mounted on top of each other, coated on top of each other or connected by means of adhesive layers.

15. Liquid crystal display according to claim 13 or 14, **characterized in that** the switchable liquid crystal medium exhibits a negative dielectric anisotropy and the liquid crystal molecules of the switchable liquid crystal medium exhibit a substantially homeotropic orientation when no electric field is applied.

16. Liquid crystal display according to at least one of claims 13 to 15, **characterized in that** it is a display of the vertically aligned (VA), multidomain VA (MVA) or patterned VA (PVA) mode.
